# EUROPEAN PATENT APPLICATION

(11) **EP 3 332 654 A1**
(43) Date of publication of application: **13.06.2018**
(21) Application number: 15900959.6
(22) Date of filing: 07.08.2015
(51) Int. Cl.: A23L 7/10, A23L 5/00

(54) **FLOUR IN CONTAINER**

(71) Applicant: Nisshin Foods Inc., Tokyo 101-8441 (JP)
(72) Inventor: OMURA, Masato, Tokyo 103-8544 (JP); SAKAKIBARA, Michihiro, Tokyo 103-8544 (JP)
(74) Representative: Hartz, Nikolai
(86) International application number: PCT/JP2015/072498
(87) International publication number: WO 2017/026004

(57) **Abstract**

Provided is wheat flour that can be shaken out from a shaker-type container onto a food stuff in small amounts with less scattering and splashing by a shaking operation, as well as less formation of lumps. Provided is packaged wheat flour packed in a shaker-type container having one or more shaker holes with a maximum width of 2 to 12 mm, the wheat flour having an angle of difference of 13.5 to 30 degrees.

## Description

### Technical Field

The present invention relates to packaged wheat flour that can be used by being shaken out from the container.

### Background Art

Wheat flour is used not only as a raw material of bread, cake, noodle, and the like but also as a coating of a foodstuff, for example, in order to make water on a surface of a foodstuff absorbed to increase its cohesion with other foodstuffs, in order to suppress stickiness of a foodstuff to prevent adhesion between foodstuffs, or in order to prevent outflow of savory taste (*umami*) or scorching of a foodstuff while the foodstuff is heated.

Wheat flour easily scatters as powder dust. However, wheat flour has a property that particles easily gather to one another to form lumps. Therefore, in order to uniformly attach wheat flour to a foodstuff, a method has been conventionally used in which a large amount of wheat flour spreads on a cutting board or the like, a foodstuff is rolled thereon, and the wheat flour is thereby attached to a surface of the foodstuff. However, this method needs an excessive amount of wheat flour relative to a foodstuff, and furthermore, a large amount of wheat flour that has not been attached to the foodstuff needs to be discarded, disadvantageously. Therefore, particularly in a household which handles only a relatively small amount of foodstuff, this method is cumbersome and wasteful work. In addition, wheat flour that has absorbed moisture of a foodstuff or the like adheres to a hand due to this method, and therefore the hand becomes sticky and other work cannot be performed.

As wheat flour with less powder scattering and formation of lumps during work, Patent Literature 1 proposes wheat flour 90% or more of which has a particle diameter of 150 µm or less and 20 cumulative volume or less of which has a particle diameter of 20 µm or less. Patent Literature 2 proposes a granulated composition for a batter, which is obtained by granulating while spraying a liquid containing an emulsifier on a powder composition containing cereal flour. However, when these are applied to foodstuffs, it is also necessary to perform the above method, and the problem of disposal or adhesion to a hand is not solved.

### Citation List

### Patent Literature

Patent Literature 1: JP 2001-000098 A
Patent Literature 2: JP 2002-171924 A

### Summary of Invention

### Technical Problem

When it is tried to shake out conventional wheat flour from a shaker-type container onto a foodstuff, the flour forms lumps, a shaker hole is clogged with the lumps, and the wheat flour does not come out of the container. However, meanwhile, when the shaker hole is made larger, a large amount of wheat flour comes out at one time, and is excessively applied onto a foodstuff. In addition, the wheat flour soars and scatters around, or hits the foodstuff and a cutting board, splashes, and easily contaminates surroundings. Therefore, the present inventors made intensive studies in order to provide wheat flour causing less scattering, splashing, and formation of lumps, and capable of being shaken out in a small amount onto a targeted part of a foodstuff from a shaker-type container.

### Solution to Problem

As a result, the present inventors have found that by filling wheat flour having a specific angle of difference in a container having one or more shaker holes with a specific size, a small amount of wheat flour can be shaken out quantitatively and evenly onto a targeted specific area while splashing and scattering of powder are suppressed.

That is, the present invention provides packaged wheat flour comprising wheat four packed in a shaker-type container having one or more shaker holes with a maximum width of 2 to 20 mm, the wheat flour having an angle of difference of 13.5 to 30 degrees.

Furthermore, the present invention provides a method for applying wheat flour, comprising shaking out wheat flour through shaker holes to apply the wheat flour to an object, wherein the wheat flour is packed in a shaker-type container having one or more shaker holes with a maximum width of 2 to 20 mm, and has an angle of difference of 13.5 to 30 degrees.

In addition, the present invention provides a method for suppressing spreading of wheat flour or formation of lumps by a shaking operation, comprising shaking out wheat flour through shaker holes to apply the wheat flour to an object, wherein the wheat flour is packed in a shaker-type container having one or more shaker holes with a maximum width of 2 to 20 mm, and has an angle of difference of 13.5 to 30 degrees.

### Advantageous Effects of Invention

The packaged wheat flour of the present invention can be sprinkled thinly and evenly on a targeted area of the surface of an object such as a foodstuff while a hand does not directly touch the wheat flour. Furthermore, the wheat flour does not contaminate a hand or surroundings by spreading in a wider area due to soaring and splashing when the wheat flour is sprinkled. Furthermore, a shaker hole is not easily clogged with the packaged wheat flour of the present invention. Therefore, a certain amount of wheat flour can be shaken out with a slight operation without shaking the container frequently or strongly. Due to the packaged wheat flour of the present invention, work of cooking using flour is simpler and more economical.

### Description of Embodiments

The packaged wheat flour of the present invention is packed in a shaker-type container having one or more shaker holes with a specific size, and is shaken out through the shaker holes of the contained so as to apply the wheat flour to (for example, sprinkle onto or dredged over) an object in small amounts. In the present invention, "shaking out" is not limited to an operation of giving a shake by directing an opening of a container downward, but includes an operation of directing the opening of the container vertically downward, an operation of tilting the container, and an operation of giving a shake by inverting or inclining the container, for example. Examples of an object to which the packaged wheat flour of the present invention is applied include a foodstuff and a cooking utensil such as a pan, a baking sheet, a cutting board, or a dish, however are not limited thereto. Use of the packaged wheat flour of the present invention can avoid spreading to surroundings due to soaring or splashing, or forming lumps when the wheat flour is applied to, particularly sprinkled onto or dredged over, an object in the manner as described above.

Preferably, the packaged wheat flour of the present invention can be used when wheat flour is applied to a foodstuff and a cooking utensil as a cooking material. For example, the packaged wheat flour of the present invention can be used when a small amount of wheat flour is attached to a foodstuff for flouring in roast cooking of a meuniere or the like or as a coating material for a deep fried food such as *Karaage* or fried food, when a small amount of wheat flour is attached to a cooking utensil for flouring to prevent adhesion of bakery dough or noodle dough, or when a small amount of wheat flour is added to a foodstuff for thickening food.

Wheat as a rawmaterial of the wheat flour used in the packaged wheat flour of the present invention may be wheat belonging to any strain such as hard wheat, soft wheat, medium-hard wheat, hexaploid wheat, or durum wheat, and may be any kind of wheat belonging to thereto. Examples of the wheat include hard wheat such as Western Red Spring (CW) produced in Canada, Dark Northern Spring (DNS) and Hard Red Winter (HRW) produced in USA, or Prime Hard (PH) produced in Australia; hexaploid wheat produced in Japan; medium-hard wheat such as Standard White (ASW) produced in Australia; soft wheat such as Western White (WW) produced in USA; and durum wheat, however are not limited thereto. Any one variety or strain of the above wheat may be used singly, or two or more different varieties or strains thereof may be used in combination. The wheat flour used in the present invention may be wheat flour obtained by milling the above wheat, and may be any one of hard wheat flour, semi-hard wheat flour, moderate wheat flour, soft wheat flour, and durum flour, or a mixture thereof, however is preferably soft wheat flour.

The wheat flour used in the present invention may be granulated wheat flour. The granulated wheat flour may contain a powder material such as cereal flour other than wheat flour, starch, a saccharide, an excipient, or dye powder. However, it is more preferable for the granulated wheat flour to have a smaller content of the other powder material such that the granulated wheat flour can retain properties intrinsic to wheat flour and can be easily applied to similar applications to conventional wheat flour. Therefore, the content of the other powder material in the granulated wheat flour (in terms of dry matter) is preferably less than 5% by mass of the whole rawmaterial flour including the above wheat flour and the other powder raw material. More preferably, the granulated wheat flour does not contain a powder material other than the above wheat flour. In other words, the content of the above wheat flour in the granulated wheat flour (in terms of dry matter) is preferably more than 95% by mass, more preferably 100% by mass.

The granulated wheat flour can be manufactured by adding water to raw material flour containing wheat flour and granulating the resultant. The granulation is preferably performed under a non-thermal condition. Here, the non-thermal condition means a temperature condition that does not increase the degree of gelatinization of raw material flour by 5% or more during the granulation step. For example, assuming that a raw material flour is wheat flour having the degree of gelatinization of 6% before granulation, the wheat flour granulated under a non-thermal condition has a degree of gelatinization of less than 11% after granulation. Such a non-thermal condition can be, for example, a condition in which external heating using a heating means is not performed, or heating time is short during the granulation step so that gelatinization of rawmaterial flour is hardly caused. Furthermore, the non-thermal condition can be, for example, a condition in which external heating using means is nor performed, or heating time is short during the granulation process, and generation of internal heat during the granulation step is small, so that gelatinization of rawmaterial flour is hardly caused. Here, the degree of gelatinization of raw material flour is a value measured by a conventional β-amylase-pullulanase method.

A method for preparing the granulated wheat flour used in the present invention is not particularly limited. However, for example, methods such as tumbling granulation, fluidized bed granulation, and stirring granulation can be used, and a method that can achieve the above non-thermal condition is preferable. Examples of a granulation step include a step in which granulation is accomplished by stirring rawmaterial flour containing such wheat flour as described above using a vertical mixer while adding water gradually; and a step in which granulation is accomplished by stirring and transferring the raw material flour using a feeder-type horizontal mixer while adding water with a spray device or the like during the transfer, however are not limited thereto. Stirring granulation is preferable from a viewpoint of convenience. Each of the above granulation methods can be performed using a commercially available granulation apparatus. Note that granulated wheat flour can be subjected to a particle-size regulation treatment or a drying treatment after granulation, if necessary. However, the treatment is also preferably performed under a condition that does not increase the degree of gelatinization from raw material flour by 5% or more.

The wheat flour used in the present invention may be non-granulated wheat flour which has not been granulated after milling, granulated wheat flour, or a mixture thereof. Furthermore, classified flour obtained by subjecting the above wheat flour to classification may be used. In the following description, the term "wheat flour" includes both non-granulated wheat flour and granulated wheat flour, unless otherwise distinguished.

The wheat flour used in the packaged wheat flour of the present invention has an angle of difference of 13.5 degrees or more, preferably 14 degrees or more, more preferably 14.5 degrees or more, and 30 degrees or less, preferably 28 degrees or less, more preferably 26 degrees or less. For example, the angle of difference of the wheat flour used in the packaged wheat flour of the present invention may be in a range of 13.5 to 30 degrees, preferably 14 to 28 degrees, more preferably 14.5 to 26 degrees. When the angle of difference of wheat flour is less than 13.5 degrees, a large force is required for shaking out the wheat flour from a container, it is difficult to control the shaking amount, and a shaker hole is easily clogged with the wheat flour. Meanwhile, when the angle of difference of the wheat flour exceeds 30 degrees, a large amount of wheat flour is shaken out from a container by a single shaking operation, and an excessive amount of the wheat flour is sprinkled on an object or an unnecessary amount of the wheat flour is used, leading to decrease in economy. In addition, the wheat flour soars and scatters, spreads around by splashing on a cutting board, a cooking table, or the like, and contaminates surroundings.

The angle of difference means an angle between an angle of repose and an angle of fall. More specifically, the angle of difference means an angle of a difference between an angle of repose of powder and an angle of fall of the powder obtained when the powder maintaining the angle of repose is broken by a certain impact. Even when powders have the same angle of repose, if the powders have different ease of collapse from each other, the angles of fall thereof are different from each other, and therefore the angles of difference thereof are different from each other. The angle of difference of wheat flour here is obtained by a difference between an angle of repose and an angle of fall measured by the following method using the same wheat flour. Typical wheat flour, including both soft wheat flour and hard wheat flour has an angle of difference of about 11 to 12.5 degrees.

### Angle of Repose

A circular table (diameter 8 cm) is set, and then 100 g of sample wheat flour is allowed to pass through a mesh having an opening of 1.7 mm, and is allowed to fall onto the circular table at a height of 7.5 cm above a center portion of the table surface using a funnel having an opening diameter of 5 mm under shaking with an amplitude of 1.5 mm, and the wheat flour is deposited on the table. At this time, the wheat flour is deposited to such an extent that the wheat flour overflows from an edge of the table. At this time, an angle formed between a ridge line of the wheat flour deposited on the table and the circular table surface is measured by laser light, and is taken as an angle of repose.

### Angle of Fall

After the angle of repose is measured, an impact is applied to a tray on which the circular table is put three times with a shocker. Then, an angle formed between a ridge line of the wheat flour remaining on the table and the circular table surface is measured by laser light, and is taken as an angle of fall.

Measurement of an angle of repose, an angle of fall, and an angle of difference of wheat flour based on the above method can be preferably performed using Powder Tester PT-X (manufactured by Hosokawa Micron Group) according to an instruction manual.

The wheat flour of the present invention preferably has an angle of repose of 36 to 57 degrees and an angle of fall of 16 to 43.5 degrees. However, the angle of repose of the wheat flour of the present invention is necessarily larger than the angle of fall.

Examples of a method for adjusting the angle of difference of wheat flour to the above range include a method for classifying wheat flour to adjust a particle diameter and a particle size distribution, and selectively collecting a portion of the wheat flour so as to have an angle of difference within a predetermined range. Other examples of a method for adjusting an angle of difference of wheat flour include a method for modifying wheat flour by altering the surface properties so as to have an angle of difference within a predetermined range. Examples of a method for altering surface properties of wheat flour include a method for mixing an excipient with wheat flour, a method for granulating wheat flour, and a method for adding a fluidity improver such as fine silicon dioxide. Furthermore, the wheat flour having surface properties altered may be used after the particle diameter or the particle size distribution thereof is adjusted by the above method. Alternatively, wheat flours obtained by classification or modification as described above may be appropriately mixed with each other, or further mixed with typical wheat flour to prepare wheat flour having a desired angle of difference. However, in view of enhancement of homogeneity of wheat flour, quality as a cooking material, and stability when the wheat flour is shaken out, it is preferable to singly use modified wheat flour obtained by altering surface properties of the above wheat flour.

Preferable examples of wheat flour used in the present invention include granulated wheat flour obtained by subjecting 100 parts by mass of raw material flour containing 95% by mass or more of wheat flour to stirring granulation under the above non-thermal condition while adding 25 to 40 parts by mass of water, optionally by further subjecting the granulated wheat flour to particle-size regulation and drying, the granulated wheat flour having 15 to 70% by volume, preferably 20 to 60% by volume of flour having a particle diameter of less than 150 µm, and 85 to 30% by volume of flour having a particle diameter of 150 µm or more. Here, the particle diameter of the above granulated wheat flour is a particle diameter calculated by a laser diffraction-scattering method.

Furthermore, as the wheat flour used in the present invention, wheat flour having an average particle diameter of 60 to 320 µm, preferably 70 to 300 µm, more preferably 80 to 250 µm is preferable because soaring or splashing of the wheat flour that has been shaken out is suppressed. Here, the average particle diameter of wheat flour means a mean volume diameter (MV) of a particle diameter calculated by a laser diffraction-scattering method.

The wheat flour used in the present invention may, depending on its intended use, be mixed with another powder material and thus provided in the form of a wheat flour composition. Examples of the other powder material include typical wheat flour such as hard wheat flour, semi-hard wheat flour, moderate wheat flour, soft wheat flour, or durum flour; cereal flour other than wheat flour, such as rye flour, rice flour, corn flour, barley flour, or bean flour; starch such as tapioca starch, potato starch, corn starch, waxy corn starch, or wheat starch, and processed starch thereof such as pregelatinized, etherified, esterified, acetylated, or crosslinked product of the above starch; a saccharide; egg powder and egg white powder; a thickener; fat and oil; an emulsifier; an excipient; a fluidizer; a seasoning, a spice, and the like; activated gluten; and an enzyme additive. The amount of wheat flour having a specific angle of difference used in the wheat flour composition according to the present invention varies depending on a factor such as intended use of the wheat flour composition or manufacturing cost thereof, however is preferably 40% by mass or more, more preferably 50% by mass or more, still more preferably 60% by mass or more. The angle of difference of the wheat flour composition is preferably within the above predetermined range.

In the present invention, the above wheat flour or wheat flour composition is provided in a form of being packed in a shaker-type container having one or more shaker holes. The shaker-type container may be a container having a size and shape which allow it to be held with one hand for operation and shaking out the wheat flour packed therein. For example, a container having a size and shape such as a cruets for seasoning or a spice is preferable. More specifically, the shaker-type container is preferably a self-standing container having a cylindrical column shape, an elliptical column shape, or a prismatic column shape having a diameter or a length of about 20 to 100 mm and a height of about 80 to 200 mm, and having a size which allows about 50 to 300 g of wheat flour to be packed in the container. Furthermore, in consideration of usability, a container having a size allows about 50 to 200 g of wheat flour to be packed in the container and having a side length of about 30 to 80 mm and a height of about 70 to 140 mm is more preferable. The material of the container is not particularly limited as long as being a material that can store wheat flour and does not deform during a shaking operation, and examples of the material include plastic, metal, and paper.

The shape of the one or more shaker holes of the shaker-type container is not particularly limited. However, examples of the shape include a circle, a triangle, a rectangle, and other polygon. The size of each of the one or more shaker holes is such that its maximum width is preferably 2 to 20 mm, more preferably 3 to 12 mm, still more preferably 4 to 8 mm. The number of the shaker holes is preferably 2 to 9, and more preferably 4 to 7. In a case where the size of each of the shaker holes is too small or the number of the holes is small, the shaking amount tends to be too small, or each of the holes is easily clogged with wheat flour. On the contrary, in a case where the size of each of the shaker holes is too large or the number of the holes is large, a large amount of wheat flour is shaken out by a single shaking operation, and an excessive amount of the wheat flour is sprinkled on an object or an unnecessary amount of the wheat flour is used, leading to decrease in economy. In addition, the wheat flour spreads due to soaring or splashing, and easily contaminates surroundings. The shaker-type container used in the present invention preferably has two to nine circular shaker holes with a diameter of 2 to 20 mm, more preferably has four to seven circular shaker holes with a diameter of 3 to 12 mm, and still more preferably has four to seven circular shaker holes with a diameter of 4 to 8 mm. Furthermore, the shaker-type container used in the present invention preferably has two to nine substantially rectangular or substantially polygonal shaker holes with a diagonal length of 2 to 20 mm, more preferably has four to seven substantially rectangular or substantially polygonal shaker holes with a diagonal length of 3 to 12 mm, and still more preferably has four to seven substantially rectangular or substantially polygonal shaker holes with a diagonal length of 4 to 8 mm.

Furthermore, the shaker-type container may have a spooning opening in addition to the one or more shaker holes . The spooning opening can be used as an opening through which the wheat flour is taken out from the container with a measuring spoon, a teaspoon, or the like, or through which a relatively large amount of the wheat flour is shaken out from the container. In the shaker-type container, the spooning opening is preferably disposed at a distance from the one or more shaker holes. For example, shaker holes may be disposed at one end on a top face of the shaker-type container, and a spooning opening may be disposed at a point 90 to 180° away from the shaker holes in the top surface.

The one or more shaker holes and the spooning opening of the shaker-type container are preferably covered with a lid. The type of the lid is not particularly limited. However, a lid that can be easily opened or closed with one hand, for example, a sliding lid or a flap lid is preferable. The lid of the shaker holes is preferably one lid capable of opening or closing a plurality of shake holes at one time. The lid of the one or more shaker holes and the lid of the spooning opening may be one shared lid or separate, distinct lids. However, in either case, it is preferable that the lid(s) is (are) configured to avoid simultaneous opening of the one or more shaker holes and the spooning opening. For example, as the lid of the one or more shaker holes and the lid of the spooning opening, two flap lids that can be independently opened or closed are used. Alternatively, as the lid of the one or more shaker holes and the lid of the spooning opening, one shared sliding lid that moves to close at least either the shaker holes or the spooning opening is used.

Preferably, in a case where the packaged wheat flour of the present invention is shaken out from the container by performing once the shaking operation of directing the opening of the contained vertically downward, the wheat flour can be shaken our in an amount just enough to flour an ingredient such as meat or fish, for example, about 0.5 g to 2 g, preferably about 0.8 to 1.4 g. In addition, preferably, in a case where the packaged wheat flour of the present invention is shaken out from the container toward a target point on a plane 10 cmbelow the container by performing the above shaking operation once, the wheat flour can be sprinkled in a perfect area around the targeted portion, for example, in a limited area where a maximum width is about 8 to 18 cm, preferably about 10 cm to 14 cm around the target point. In a case where a larger amount of the wheat flour is shaken out from the container or the wheat flour is sprinkled in a wider area, it is only required to repeat the above shaking operation or to perform the shaking operation more strongly.

### [Examples]

Next, Examples will be described in order to more specifically describe the present invention. However, the present invention is not limited only to the following Examples. Note that in the following Examples, angles of repose, fall, and difference of wheat flour are values measured using Powder Tester PT-X (manufactured by Hosokawa Micron Group).

### Manufacturing Examples 1 to 11: Packaged wheat flour

In a container, 1. kg of commercially available wheat flour (soft wheat flour: "Flour" manufactured by Nisshin Flour Milling Inc.; average particle diameter 54 µm; angle of difference 12.2 degrees, angle of repose 56.8 degrees) was put. Water was added thereto with a sprayer under stirring with a hand mixer, and then drying was performed in a thermostatic chamber. Wheat flour having an angle of difference indicated in Table 1 was manufactured by changing various conditions such as an amount of added water, temperature during stirring, and drying time. The obtained wheat flours had an average particle diameter of about 60 to 320 µm. The average particle diameter is a volume mean diameter (MV) of a particle diameter measured by a laser diffraction-scattering method using Microtrac MT 3000 II (Nikkiso Co., Ltd.). In a cylindrical container having a diameter of 50 mm and a height of 120 mm, 100 g of each of the wheat flours was packed. Thereafter, a circular plastic plate having a diameter of 50 mm and a thickness of 0.2. mm and having five shaker holes with a diameter of 5 mm was fitted to the top of the container to manufacture shaker-packaged wheat flour. Note that each of the wheat flours in Manufacturing Examples 1 to 11 had an angle of repose in a range of 47.2 to 55.3 degrees and an angle of fall in a range of 16.5 to 41.2 degrees.

### Manufacturing Example 12: Packaged wheat flour

Wheat flour having an angle of difference of 14.6 degrees was manufactured by appropriately mixing the wheat flour (angle of difference 16.1 degrees) in Manufacturing Example 5 with raw material wheat flour (angle of difference 12.2 degrees). From this wheat flour, packaged wheat flour was manufactured in similar procedures to Manufacturing Examples 1 to 11. Note that wheat flour in Manufacturing Example 12 had an angle of repose of 56.0 degrees and an angle of fall of 41.4 degrees.

### Test Example 1: Measurement of shaking amount and spreading area

Packaged wheat flour in each of Manufacturing Examples 1 to 12 was shaken out on a smooth flat surface placed horizontally. The shaking was done at a height of 10 cm just above a marker located at a center of the flat surface by performing an operation of directing the opening of the container vertically downward toward the marker once. The amount of wheat flour that had been shaken out was measured and was taken as a shaking amount. In addition, an area over which the wheat flour that had been shaken out spread by scattering or splashing was specified, and the length of a straight line extending from one point on an outer edge of the area to another outer edge through the above mark was measured. A maximum value of the lengths was taken as a spreading area. Measurement was performed 10 times in total for each wheat flour. Average values of the shaking amount and the spreading area were determined, and were evaluated in three stages of A, B, and C according to the following criteria. In addition, distribution uniformity of wheat flour that had been shaken out was evaluated. For the distribution uniformity, the wheat flour that had been shaken out from a container by a similar operation to the above was visually observed, and a state of spreading of the wheat flour that hadbeen shaken out was evaluated with four stages of A, B, C, and D according to the following criteria. The evaluation was performed three times. When the same score appeared twice or more, the score was adopted as an evaluation result of distribution uniformity. When all the three evaluations resulted in different scores, the distribution uniformity was judged to be unevaluable.

Shaking amount: A 0.8 to 1.4 g
B 0.5 g or more and less than 0.8 g or more than 1.4 g and 2 g or less
C less than 0.5 g or more than 2 g
Spreading area: A 10 to 14 cm
B 8 cm or more and less than 10 cm or more than 14 cm and 18 cm or less
C less than 8 cm or more than 18 cm
Distribution uniformity : A Substantially uniform and almost no unevenness
B Slightly uneven
C Significantly uneven
D Significantly uneven, and there are some portions where the wheat flour is not at all distributed or distributed in lumps.

The results are indicated in Table 1. Note that results using commercially available soft wheat flour ("Flour" manufactured by Nisshin Flour Milling Inc.; angle of difference 12.2 degrees, angle of repose 56.8 degrees) are indicated as Reference Example 1, and results using commercially available hard wheat flour ("Camellia" manufactured by Nisshin Flour Milling Inc.; angle of difference 11.9 degrees, angle of repose 57.4 degrees) are indicated as Reference Example 2.

**[Table 1]**

| | Manufacturing Example | | | | | | | | | | | | Reference Example | |
|---|---|---|---|---|---|---|---|---|---|---|---|---|---|---|
| | 1 | 2 | 3 | 4 | 5 | 6 | 7 | 8 | 9 | 10 | 11 | 12 | 1 | 2 |
| Angle of difference (degree) | 12.5 | 13.5 | 14.1 | 14.5 | 16.1 | 19.4 | 22.5 | 24.5 | 27.8 | 29.8 | 30.7 | 14.6 | 12.2 | 11.9 |
| Angle of repose (degree) | 53.4 | 53.4 | 55.3 | 52.1 | 51.7 | 50.2 | 49.4 | 48.8 | 48.1 | 47.5 | 47.2 | 56.0 | 56.8 | 57.4 |
| Shaking amount (g) | 0.1 (C) | 0.6 (B) | 0.7 (B) | 0.9 (A) | 0.9 (A) | 1.0 (A) | 1.1 (A) | 1.2 (A) | 1.4 (A) | 1.8 (B) | 2.0 (B) | 0.7 (B) | 0 (C) | 0 (C) |
| Spreading area (cm) | 6.9 (C) | 9.6 (B) | 11.5 (A) | 12.1 (A) | 12.2 (A) | 12.6 (A) | 12.8 (A) | 13.5 (A) | 14.2 (B) | 17.5 (B) | 19.0 (C) | 12.0 (A) | 0 (C) | 0 (C) |
| Distribution uniformity | C | A | A | A | A | A | A | A | B | B | C | A | D | D |

As indicated in Table 1, for the cases where wheat flour was shaken out from a container for use, when the angle of difference of the wheat flour was smaller, the shaking amount and the spreading area were reduced, and it was difficult to shaken out the wheat flour because of clogging of a hole. Meanwhile, when the angle of difference of wheat flour was larger, the shaking amount was increased, the wheat flour rolled over a wide area, and it was difficult to disperse the wheat flour uniformly. As a result of this test, it has been found that wheat flour preferably has an angle of difference of about 13.5 to 30 degrees in order to shake out the wheat flour from a container without clogging of a shaker hole in an amount and an area suitable for sprinkling the wheat flour on a targeted portion of a general foodstuff. For the packaged wheat flour having the angle of difference (Manufacturing Examples 2 to 10 and 12), the shaking amount and spreading area fell within the suitable range and did not vary much between shaking operations. Furthermore, even repeated shaking operations did not cause the holes to be clogged, which means that high ease of handling was achieved. In Manufacturing Example 1 in which the angle of difference of wheat flour was smaller than 13.5 degrees, only a small amount of wheat flour was shaken out by a single shaking operation. In Manufacturing Example 11 in which the angle of difference of wheat flour was larger than 30 degrees, the wheat flour scattered over a wide area by a single shaking operation. Commercially available wheat flour having a smaller angle of difference than that of Manufacturing Example 1 was not shaken out at all from a container due to clogging of a hole even during the first shaking out.

### Test example 2: Examination of shaker-type container

Shaker-packaged wheat flour was manufactured in similar procedures to Manufacturing Example 7 except for varying the size of a shaker hole of a shaker-type container as indicated in Table 2 (Manufacturing Examples 13 to 25). For each packaged wheat flour, a shaking amount, a spreading area, and distribution uniformity were evaluated in similar procedures to Test Example 1. The results are indicated in Table 2. Note that Table 2 indicates the result of Manufacturing Example 7 again.

**[Table 2]**

| | Manufacturing Example | | | | | | | | | | | | | |
|---|---|---|---|---|---|---|---|---|---|---|---|---|---|---|
| | 13 | 14 | 15 | 16 | 17 | 18 | 19 | 20 | 21 | 22 | 7 | 23 | 24 | 25 |
| Angle of difference (degree) | 22.5 | 22.5 | 22.5 | 22.5 | 22.5 | 22.5 | 22.5 | 22.5 | 22.5 | 22.5 | 22.5 | 22.5 | 22.51 | 22.5 |
| Shaker hole diameter (mm) | 1.5 | 2 | 3 | 4 | 12 | 20 | 21 | 5 | 5 | 5 | 5 | 5 | 5 | 5 |
| Number of shaker holes (piece) | 5 | 5 | 5 | 5 | 5 | 5 | 5 | 1 | 2 | 4 | 5 | 7 | 9 | 10 |
| Shaking amount (g) | 0.3 (C) | 0.7 (B) | 0.8 (A) | 1.0 (A) | 1.4 (A) | 2.0 (B) | 2.2 (C) | 0.5 (B) | 0.7 (B) | 0.9 (A) | 1.1 (A) | 1.4 (A) | 1.7 (B) | 2.0 (B) |
| Spreading area (cm) | 8.5 (B) | 9.9 (B) | 10.5 (A) | 12.2 (A) | 16.3 (B) | 18.0 (B) | 21.8 (C) | 8.1 (B) | 10.3 (A) | 11.8 (A) | 12.8 (A) | 14.6 (B) | 16.7 (B) | 17.7 (B) |
| Distribution uniformity | B | A | A | A | A | B | B | A | A | A | A | A | A | B |

As indicated in Table 2, the shaking amount and spreading area of the wheat flour were successfully adjusted to the suitable ranges by suitably designing the size and the number of shaker holes.

## Claims

1. Packaged wheat flour, comprising wheat flour packed in a shaker-type container having one or more shaker holes with a maximum width of 2 to 20 mm, the wheat flour having an angle of difference of 13.5 to 30 degrees.

2. The packaged wheat flour according to claim 1, wherein the shaker-type container has two to nine of the shaker holes.

3. The packaged wheat flour according to claim 1 or 2, wherein the wheat flour is granulated wheat flour or a mixture of granulated wheat flour and non-granulated wheat flour.

4. The packaged wheat flour according to any one of claims 1 to 3, wherein the wheat flour has an angle of difference of 14.5 to 26 degrees.

5. The packaged wheat flour according to any one of claims 1 to 4, wherein the wheat flour is soft wheat flour.

6. The packaged wheat flour according to any one of claims 1 to 5, wherein the wheat flour has an average particle diameter of 60 to 320 µm.

7. A method for applying wheat flour, comprising shaking out wheat flour through shaker holes to apply the wheat flour to an object, wherein the wheat flour is packed in a shaker-type container having two to nine of the shaker holes with a maximum width of 2 to 20 mm and the wheat flour has an angle of difference of 13.5 to 30 degrees.

8. A method for suppressing spreading of or formation of lumps of wheat flour, comprising shaking out wheat flour through shaker holes to apply the wheat flour to an object, wherein the wheat flour is packed in a shaker-type container having two to nine of the shaker holes with a maximum width of 2 to 20 mm and the wheat flour has an angle of difference of 13.5 to 30 degrees.

9. The method according to claim 7 or 8, wherein the wheat flour is granulated wheat flour or a mixture of granulated wheat flour and non-granulated wheat flour.

10. The method according to any one of claims 7 to 9, wherein the wheat flour is soft wheat flour.

11. The method according to any one of claims 7 to 10, wherein the wheat flour has an average particle diameter of 60 to 320 µm.
